# FASCICULE DE BREVET EUROPEEN

(11) **EP 2 893 732 B1**
(45) Date de publication et mention de la délivrance du brevet: **04.03.2020**
(21) Numéro de dépôt: 13792265.4
(22) Date de dépôt: 10.10.2013
(51) Int. Cl.: H04W 8/18, H04W 48/18

(54) **PROCÉDÉ POUR LA CONNEXION D'UN TERMINAL AU MEILLEUR RÉSEAU DE TÉLÉPHONIE MOBILE DISPONIBLE**
VERFAHREN ZUM ANSCHLIESSEN EINES ENDGERÄTS AN DAS BESTE VERFÜGBARE MOBILFUNKNETZ
METHOD FOR CONNECTING A TERMINAL TO THE BEST AVAILABLE MOBILE TELEPHONE NETWORK

(30) Priorité: 10.10.2012 FR 1259672
(43) Date de publication de la demande: 15.07.2015
(73) Titulaire: Bouygues Telecom, 75116 Paris (FR)
(72) Inventeur: LEHOUX, Fabrice, F-91300 Massy (FR)
(74) Mandataire: Regimbeau
(86) Numéro de dépôt international: PCT/EP2013/071220
(87) Numéro de publication internationale: WO 2014/057065

(56) Documents cités:
- WO-A2-01/05169
- US-A1- 2010 099 403

## Description

### DOMAINE TECHNIQUE GENERAL

La présente invention concerne le domaine du roaming (en français « itinérance ») réseau en téléphonie mobile.

Plus précisément, elle concerne un procédé pour la connexion d'un terminal au meilleur réseau de téléphonie mobile disponible.

### ETAT DE L'ART

Les « objets communicants » sont un type de dispositifs informatiques qui comprennent une carte SIM et sont aptes à interagir de façon autonome avec d'autres objets ou serveurs via les réseaux de téléphonie mobile. Ce domaine, en pleine expansion, s'avère tributaire de la qualité des réseaux.

Un incident réseau a en effet des conséquences lourdes sur un groupe d'objets communicants en paralysant leur fonctionnement.
Les objets communicants (ainsi que les équipements des usagers de la téléphonie mobile en général) situés dans un pays qui n'est pas le pays d'origine du fournisseur du service, sont dits en situation de « roaming » (en français « itinérance »), situation dans laquelle des risques de blocage à cause d'un accident réseau peuvent être minimisés.

En effet, tel qu'ils sont définis par les normes GSM/UMTS dans les réseaux mobiles, les mécanismes de roaming décrivent la capacité des clients à accéder à leurs services de téléphonie mobile (voix ou données) en sélectionnant un des réseaux locaux disponibles dans la zone et si besoin en passant d'un réseau à un autre.

Les objets communicants (ainsi que les équipements des usagers de la téléphonie mobile en général) disposent ainsi d'un niveau de qualité de service élevé, qui est permis, grâce à des multiples accords d'itinérance signés entre des opérateurs, par une bascule d'un opérateur à un autre lors d'un incident réseau ou en fonction de la couverture géographique de chacun des opérateurs partenaires.

Toutefois, les normes prévoient qu'en l'absence d'incident, un terminal continue à s'accrocher au dernier réseau opérationnel connu (ou à un réseau de plus haute priorité dans une liste de réseaux préférés), quand bien même des réseaux avec une meilleure qualité de réception seraient disponibles.

Pouvoir s'accrocher au meilleur réseau disponible est important pour l'abonné (en particulier pour les objets communicants, comme expliqué). Un utilisateur humain peut sélectionner manuellement le réseau de son choix, mais une telle procédure est laborieuse, et n'est pas applicable aux objets communicants.

La demande de brevet US 2012/0166622 propose l'utilisation d'un serveur distant qui « choisit » le meilleur réseau et l'indique à la carte SIM pour sélection « manuelle », comme le ferait l'utilisateur. Ce système est toutefois lourd et nécessite des développements applicatifs au niveau des terminaux ainsi qu'un échange de bout en bout entre un terminal et un applicatif qui peut s'avérer difficile à établir surtout dans des conditions dégradées, d'incident, etc.

Il serait par conséquent souhaitable de disposer d'un mécanisme de roaming amélioré qui apporte une solution simple et universelle de connexion au meilleur réseau disponible, sachant que, comme expliqué précédemment, le roaming est décrit dans des normes et qu'il n'est donc pas possible pour les opérateurs de modifier sensiblement les mécanismes existants. Un autre exemple ce trouve dans le document de brevet US2010/099403.

### PRESENTATION DE L'INVENTION

La présente invention se rapporte ainsi à un procédé pour la connexion d'un terminal via des moyens de connexion à un meilleur réseau de téléphonie mobile choisi parmi une pluralité de réseaux de téléphonie mobile disponibles, le terminal comprenant une carte d'identification d'abonné, le procédé étant caractérisé en ce qu'il comprend lors d'une relance de la carte d'identification d'abonné et/ou des moyens de connexion les étapes de :
(a) Réinitialisation par des moyens de traitement de la carte d'identification d'abonné d'au moins un fichier d'informations de connexion stocké sur des moyens de stockage de données de la carte d'identification d'abonné ;
(b) Sélection du meilleur réseau parmi ladite pluralité de réseaux de téléphonie mobile disponibles.

Selon d'autres caractéristiques avantageuses et non limitatives :
- le réseau sélectionné à l'étape (b) comme étant le meilleur est le réseau pour lequel la puissance reçue par le terminal est la plus élevée ;
- un fichier d'informations de connexion est un fichier d'informations de localisation dans lequel est inscrit un dernier réseau auquel le terminal a été connecté, la réinitialisation dudit fichier à l'étape (a) consistant en la suppression des informations relatives audit dernier réseau dudit fichier ;
- un ou plusieurs autres fichiers d'informations de connexion sont choisis parmi un deuxième fichier d'informations de localisation, des fichiers d'informations de chiffrement, et des fichiers d'informations d'intégrité de clés, l'étape (a) comprenant la réinitialisation desdits autres fichiers d'informations de connexion à chaque relance de la carte d'identification d'abonné et/ou de moyens de connexion ;
- l'étape (a) comprend la réinitialisation à chaque relance de la carte d'identification d'abonné et/ou de moyens de connexion de tous les fichiers d'informations de connexion stockés dans les moyens de stockage de données de la carte d'identification d'abonné contenant des informations relatives à un choix d'un meilleur réseau parmi une pluralité de réseaux de téléphonie mobile ;
- l'étape (a) comprend la génération par des moyens de traitement de données de la carte d'identification d'abonné (11), à chaque relance de la carte d'identification d'abonné (11), d'un message caractéristique de la relance, la génération dudit message déclenchant la réinitialisation dudit au moins un fichier d'informations de connexion ;
- une liste de réseaux préférés est stockée sur les moyens de stockage de données de la carte d'identification d'abonné, cette liste étant choisie vide pour au moins un territoire donné.

Selon un deuxième aspect, l'invention concerne un terminal comprenant des moyens de traitement de données, des moyens de connexion à un réseau de téléphonie mobile, et une carte d'identification d'abonné comprenant des moyens de traitement de données et des moyens de stockage de données sur lesquels est stocké au moins un fichier d'informations de connexion, caractérisé en ce que lesdits moyens de connexion et lesdits moyens de traitement de la carte d'identification d'abonné sont configurés pour la mise en œuvre du procédé selon le premier aspect.

Selon d'autres caractéristiques avantageuses et non limitatives,
- les moyens de traitement de données du terminal sont configurés pour envoyer à la carte d'identification d'abonné, suite à la relance des moyens de connexion, un message d'instructions déclenchant la réinitialisation dudit au moins un fichier d'informations de connexion.

### PRESENTATION DES FIGURES

D'autres caractéristiques et avantages de la présente invention apparaîtront à la lecture de la description qui va suivre d'un mode de réalisation préférentiel. Cette description sera donnée en référence à l'unique figure indexée représentant un schéma d'une architecture de réseau dans laquelle est mis en œuvre le procédé selon l'invention.

### DESCRIPTION DETAILLEE

### Carte SIM

Une carte SIM (« Subscriber Identity Module ») est une puce de type UICC (« Universal Integrated Circuit Card ») comprenant des moyens de traitement de données (sous la forme d'un microcontrôleur) et de la mémoire (de type EEPROM (« Electrically-Erasable Programmable Read-Only Memory ») ou flash, généralement d'une taille de 64Ko, bien que des modèles de 128 ou 256Ko sont disponibles).

Elle permet de stocker les informations spécifiques à l'abonné du service de téléphonie mobile, ainsi qu'éventuellement des données et des applications de l'utilisateur (par exemple son répertoire).

Parmi les données essentielles (dont l'organisation est régie par les normes GSM et GPRS) on trouve des fichiers dits élémentaires (EF, « Elementary Files »), parmi lesquels des listes de réseaux PLMN (« Public Land Mobile Network »), en d'autres termes les réseaux de télécommunications entre lesquels le roaming peut s'effectuer.

Parmi ces listes, on trouve ainsi les fichiers EF-LOCI et EF-LOCIGPRS (« LOCation Information ») qui contiennent des informations de localisation, respectivement pour le service « voix » (norme GSM) et le service « données » (norme GPRS).

On trouve d'autres fichiers, par exemple l'EF-FPLMN (la liste des « Forbidden » PPLMs) et l'EF-PPLMN (la liste des « Preferred » PLMNs), chacune pouvant contenir le nom de quatre réseaux. Selon la norme, la première liste regroupe les réseaux auxquels on interdit au terminal comprenant la SIM de se connecter, et la seconde liste regroupe les réseaux auquel le terminal comprenant la SIM se connecte en priorité.

### Principe de l'invention

Comme expliqué précédemment, les PLMNs désignent les différents réseaux auxquels un abonné peut se connecter. Outre les FPLMNs et les PPLMNs, le sigle RPLMN (« Registered » PLMN) désigne le dernier réseau de téléphonie avec lequel une connexion a été établie. Ce RPLMN (et plus particulièrement les informations de localisation de ce réseau) est inscrit dans un certain nombre de fichiers d'informations de connexion, en particulier le fichier LOCI mentionné précédemment. Or la norme prévoit que si un RPLMN est inscrit dans le fichier LOCI, un terminal essaie de se connecter par défaut à ce réseau avant de chercher une éventuelle solution de remplacement.

La présente invention propose comme il sera expliqué plus tard de réinitialiser au moins un fichier d'informations de connexion, et en particulier le fichier LOCI, à chaque relance du modem du terminal, de sorte à empêcher une reconnexion par défaut au RPLMN et autoriser une sélection du meilleur réseau disponible.

Il est souhaitable de fournir un fichier PPLMN vide, puisque la norme prévoit actuellement qu'après la connexion au RPLMN indiqué dans le LOCI, le modem 12 cherche à se connecter à un éventuel PPLMN.

Il est à noter que le document US2010/0099403 décrit une réinitialisation d'un fichier LOCI de carte SIM, mais uniquement afin d'éviter des erreurs en rentrant dans un pays (en particulier au sortir du mode avion, une fois que l'on a atterri), afin de gagner du temps/économiser de la batterie. Cette utilisation nécessite d'ailleurs l'utilisation d'un fichier PPLMN non vide (dans lequel est indiqué un ou plusieurs réseaux que l'on cherche à choisir en priorité), contrairement à la présente invention.

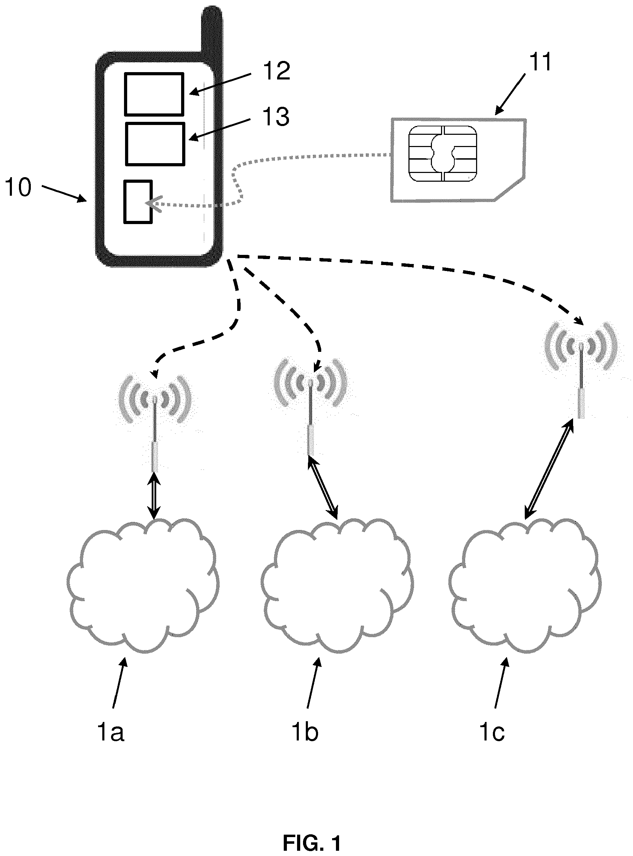

En référence à la figure 1, une carte d'identification d'abonné 11 (Par « carte d'identification d'abonné », on comprendra tout circuit intégré capable d'assurer les fonctions d'identification d'un abonné via des données qui y sont stockées, et tout particulièrement une carte SIM) est utilisée pour la connexion d'un terminal 10 à un réseau 1a, 1b, 1c de téléphonie mobile.

Le terminal 10 peut être comme expliqué précédemment soit un objet communiquant, soit un terminal mobile personnel (un smartphone, une tablette tactile, etc.). Dans tous les cas, il comprend des moyens de traitement de données 13 pour la mise en œuvre d'un système d'exploitation et d'applications logicielles, et des moyens de connexion 12 (qui consistent en particulier en un modem) à un réseau de téléphonie mobile. Le terminal 10 est apte à recevoir la carte d'identification d'abonné 11 (en particulier une carte SIM telle que décrite précédemment) prévue pour le stockage des informations de connexion aux réseaux de téléphonie mobile et notamment des fichiers EF

Dans la suite de la présente description, on prendra l'exemple d'une carte SIM, mais on comprendra que le terme « d'identification d'abonné » ne doit pas être réduit aux cartes SIM mais peut concerner tous les supports actuels et à venir d'identification de l'abonné, quelle que soit leur technologie, c'est-à-dire non nécessairement des puces de type UICC. On notera d'ailleurs qu'il est courant pour les objets communicants que cette puce ne présente pas le format « classique » d'une carte SIM mais soit directement soudée sur la carte mère. En outre, à titre d'exemple, on citera des solutions alternatives utilisant des cartes microSD (« Secure Digital ») qui comprennent également des moyens de traitement de données et un espace de stockage apte à stocker des fichiers EF.

Un aspect de l'invention concerne un procédé pour la connexion du terminal 10 via les moyens de connexion 12 à un meilleur réseau 1b de téléphonie mobile choisi parmi une pluralité de réseaux 1a, 1b, 1c de téléphonie mobile disponibles. Par meilleur, on entend celui qui procède un critère donné (le plus souvent relatif à la qualité de signal, notamment sa puissance) le plus élevé à un moment donné (voir plus loin).

Grâce à la carte d'identification d'abonné 11 que comprend le terminal 10, le procédé comprend lors d'une relance de la carte d'identification d'abonné 11 et/ou des moyens de connexion 12 des étapes de :
(a) Réinitialisation par les moyens de traitement de la carte d'identification d'abonné 11 d'au moins un fichier d'informations de connexion stocké sur les moyens de stockage de données de la carte d'identification d'abonné 11 ;
(b) Sélection d'un meilleur réseau 1b parmi ladite pluralité de réseaux 1a, 1b, 1c de téléphonie mobile disponibles.

La carte d'identification d'abonné 11 comprend donc des moyens de traitement de données et des moyens de stockage de données sur lesquels est stocké l'au moins un fichier d'informations de connexion, et en particulier le fichier d'informations de localisation (LOCI).

Les moyens de traitement de la carte d'identification d'abonné 11 sont configurés pour réinitialiser ledit fichier LOCI à chaque relance de la carte 11 et/ou des moyens de connexion 12 du terminal 10.

Puisque ce fichier LOCI contient ledit dernier réseau RPLMN, la réinitialisation du fichier LOCI consiste plus particulièrement en la suppression des informations relatives audit dernier réseau RPLMN du fichier LOCI.

Par fichier d'informations de connexion, on entend plus particulièrement un fichier contenant des informations relatives au choix par un terminal dans lequel est insérée la carte 11 d'un réseau parmi une pluralité de réseaux de téléphonie mobile 1a, 1b, 1c.

Les moyens de traitement de la carte d'identification d'abonné 11 peuvent ainsi être également configurés pour réinitialiser similairement à chaque relance de la carte SIM 11 et/ou du modem 12 d'autres fichiers d'informations de connexion tels un deuxième fichier d'informations de localisation (le LOCIGPRS), des fichiers d'informations de chiffrement (« Key Ciphering » EF-Kc [4F20] et EF-KcGPRS [4F52]), des fichiers d'informations d'intégrité de clés (EF-Keys [6F08] et EF-KeysPS [6F09]), ainsi que tout autre fichier connu de l'homme du métier qui contiendrait des informations susceptibles de biaiser la sélection d'un meilleur réseau. En d'autres termes, on comprendra que les moyens de traitement de la carte SIM 11 peuvent être configurés pour réinitialiser des (voire tous les) fichiers d'informations de connexion contenant des informations relatives à un choix d'un meilleur réseau 1b parmi une pluralité de réseaux de téléphonie mobile 1a, 1b, 1c.

Il est à noter que les relances de la carte SIM 11 et du modem 12 sont en général liées, dans la mesure où le redémarrage de l'un entraîne le plus souvent le redémarrage de l'autre. Un redémarrage du terminal 10 entraîne par ailleurs dans tous les cas le redémarrage de ces deux composants.

Il est également à noter qu'un redémarrage de la carte SIM 11 déclenche la génération d'un message caractéristique du redémarrage (en particulier le message « EVENT_FIRST_COMMAND_AFTER_ATR ») par les moyens de traitement de la carte SIM 11, message qui peut avantageusement servir d'événement déclencheur de la réinitialisation desdits fichiers d'informations de connexion, puisque ce message est émis suffisamment tôt avant la lecture du fichier LOCI par le modem 12 du terminal 10.

Toutefois, la relance du modem 12 (en anglais « refresh ») doit être comprise comme toute réactualisation de la connexion, et pas seulement un redémarrage de ce modem 12 voire du terminal 10. Par exemple, cette relance peut être commandée par l'abonné, voire être mise en œuvre à intervalle réguliers. Dans ces cas, la carte SIM 11 n'est pas forcément relancée. En l'absence de fichier de redémarrage de la carte SIM, la relance du modem 12 comprend avantageusement (en complément ou en remplacement de la détection de message de redémarrage) l'émission par des moyens de traitement de données 13 du terminal 10 d'un message d'instructions (en particulier un message propriétaire, de type APDU « Application Protocol Data Unit ») à la carte SIM 11, message sur la base duquel la réinitialisation desdits fichiers d'informations de connexion est effectuée.

Une application, mise en œuvre par les moyens de traitement de données 13, peut contrôler l'émission de ce message d'instructions en fonction d'une politique de l'opérateur ou de choix de l'utilisateur.

Alors qu'en l'absence de réinitialisation du LOCI le modem 12 aurait théoriquement dû se reconnecter au dernier réseau de téléphonie RPLMN avec lequel une connexion a été établie (car c'est le dernier réseau opérationnel en termes de service voix auquel le terminal a été connecté, et il est dès lors désigné dans le fichier LOCI), le fait que le fichier soit vide force les moyens de connexion 12 à refaire une éligibilité de réseau, en d'autres termes de sélectionner un réseau parmi les réseaux disponibles.

En suivant la norme, le nouveau réseau sélectionné est en général celui pour lequel la puissance reçue est la plus élevée, c'est-à-dire celui qui a toutes les chances d'être le « meilleur » réseau en termes de qualité de signal. L'invention n'est toutefois pas limitée à la puissance du signal comme seul critère d'un « meilleur réseau », mais de façon générale on comprendra que dans la mesure où le présent procédé permet la sélection d'un réseau « sans a priori » parmi l'ensemble des réseaux disponibles, celui-ci sera automatiquement le meilleur selon le ou les critères des moyens de connexion 12 lors de la connexion (critère qui est le plus souvent la puissance), alors que dans les procédés connus, tant qu'un réseau est disponible il était utilisé même s'il n'était plus le meilleur.

On notera qu'il est tout à fait possible que le nouveau réseau soit le même que le dernier réseau RPLMN qui était désigné dans le fichier LOCI. Cela signifie seulement que l'ancien réseau est toujours le meilleur réseau disponible. Au contraire, le RPLMN (qui a forcément été le meilleur réseau disponible à un moment donné) peut à présent présenter une puissance inférieure à celle d'un réseau disponible, si par exemple l'abonné s'est déplacé.

La manœuvre de réinitialisation du fichier LOCI par les moyens de traitement de données de la carte d'identification d'abonné 11 permet une sélection sans a priori (en particulier lorsque le fichier PPLMN est vide) d'un réseau parmi tous les réseaux disponibles, et ce à tout moment. On remarque en outre que ce résultat est obtenu du seul fait des moyens de traitement de la carte d'identification d'abonné. Du point de vue du terminal 10, aucune configuration n'est à modifier.

Ici, le simple fait de relancer à intervalles réguliers la carte 11 ou les moyens de connexion 12 entraîne naturellement le fait que le réseau auquel le terminal 10 est connecté soit le meilleur.

A titre d'exemple, on peut supposer en référence à la figure 1 que le premier réseau 1a est le dernier réseau RPLMN, que le deuxième réseau 1b est un réseau de puissance supérieure à celle du premier réseau 1a, et que le troisième réseau 1c est un réseau de puissance inférieure au premier réseau 1a.

Si le critère de sélection du réseau est la puissance, on a donc 1b > 1a > 1c.

Le premier réseau 1a est le RPLMN, il est donc inscrit dans le fichier LOCI. Si ce réseau est disponible (c'est le cas ici), les moyens de connexion 12 du terminal 10 s'y connecteront donc par défaut, bien que ce ne soit pas le meilleur réseau.

La réinitialisation du fichier LOCI (et donc la suppression du RPLMN) par les moyens de traitement de la carte SIM 11 empêche donc les moyens de connexion 12 de se connecter par défaut au premier réseau 1a, et les force à refaire une sélection de réseau. Dans une telle sélection, c'est donc le réseau 1b qui est sélectionné comme étant le meilleur réseau. Les moyens de connexion 12 initialisent alors une connexion du terminal 10 à ce deuxième réseau 1b.

### Carte & Terminal

Selon un deuxième aspect, l'invention concerne le terminal 10 comprenant des moyens de traitement de données 13, des moyens de connexion 12 à un réseau 1a, 1b, 1c de téléphonie mobile, ainsi qu'une carte d'identification d'abonné 11 permettant la mise en œuvre du procédé selon le premier aspect de l'invention.

La carte d'identification d'abonné 11 est « autosuffisante », c'est-à-dire que son installation dans le terminal 10 suffit pour que le procédé de connexion à un meilleur réseau de téléphonie mobile puisse se mettre naturellement en œuvre, sans nécessiter de développer un module applicatif spécifique au niveau du terminal, à chaque démarrage, notamment grâce à la détection de messages d'historique mentionnée précédemment.

Comme expliqué précédemment, il est possible, alternativement ou en complément, de configurer les moyens de traitement de données 13 du le terminal 10 pour qu'ils relancent à intervalles régulier ou sur commande de l'utilisateur ou d'une application les moyens de connexion 12 et envoient un message d'instruction à la carte d'identification d'abonné 11 afin de garantir à l'abonné une connexion constante au meilleur réseau disponible.

## Revendications

1. Procédé pour la connexion d'un terminal (10) via des moyens de connexion (12) à un meilleur réseau (1b) de téléphonie mobile choisi parmi une pluralité de réseaux (1a, 1b, 1c) de téléphonie mobile disponibles, le terminal (10) comprenant une carte d'identification d'abonné (11), le procédé étant **caractérisé en ce qu'**il comprend lors d'une relance de la carte d'identification d'abonné (11) et/ou des moyens de connexion (12) les étapes de :
(a) Réinitialisation par des moyens de traitement de la carte d'identification d'abonné (11) d'au moins un fichier d'informations de connexion stocké sur des moyens de stockage de données de la carte d'identification d'abonné (11) ;
(b) Sélection sans a priori du meilleur réseau (1b) selon un critère des moyens de connexion (12) parmi ladite pluralité de réseaux (1a, 1b, 1c) de téléphonie mobile disponibles,
dans lequel une liste de réseaux préférés, PPLMNs, choisie vide est stockée sur les moyens de stockage de données de la carte d'identification d'abonné (11).

2. Procédé selon la revendication 1, dans lequel le réseau sélectionné à l'étape (b) comme étant le meilleur est le réseau pour lequel la puissance reçue par le terminal (10) est la plus élevée.

3. Procédé selon l'une des revendications 1 et 2, dans lequel un fichier d'informations de connexion est un fichier d'informations de localisation, LOCI, dans lequel est inscrit un dernier réseau (1a) auquel le terminal (10) a été connecté, RPLMN, la réinitialisation dudit fichier, LOCI, à l'étape (a) consistant en la suppression des informations relatives audit dernier réseau, RPLMN, dudit fichier, LOCI.

4. Procédé selon la revendication 3, dans lequel un ou plusieurs autres fichiers d'informations de connexion sont choisis parmi un deuxième fichier d'informations de localisation, LOCIGPRS, des fichiers d'informations de chiffrement, Kc et KcGPRS, et des fichiers d'informations d'intégrité de clés, Keys et KeysPS, l'étape (a) comprenant la réinitialisation desdits autres fichiers d'informations de connexion à chaque relance de la carte d'identification d'abonné (11) et/ou de moyens de connexion (12).

5. Procédé selon l'une des revendications précédentes, dans lequel l'étape (a) comprend la réinitialisation à chaque relance de la carte d'identification d'abonné (11) et/ou de moyens de connexion (12) de tous les fichiers d'informations de connexion stockés dans les moyens de stockage de données de la carte d'identification d'abonné (11) contenant des informations relatives à un choix d'un meilleur réseau (1b) parmi une pluralité de réseaux de téléphonie mobile (1a, 1b, 1c).

6. Procédé selon l'une des revendications précédentes, dans lequel l'étape (a) comprend la génération par des moyens de traitement de données de la carte d'identification d'abonné (11), à chaque relance de la carte d'identification d'abonné (11), d'un message caractéristique de la relance, la génération dudit message déclenchant la réinitialisation dudit au moins un fichier d'informations de connexion.

7. Terminal (10) comprenant des moyens de traitement de données (13), des moyens de connexion (12) à un réseau (1a, 1b, 1c) de téléphonie mobile, et une carte d'identification d'abonné (11) comprenant des moyens de traitement de données et des moyens de stockage de données sur lesquels est stocké au moins un fichier d'informations de connexion, **caractérisé en ce que** lesdits moyens de connexion (12) et lesdits moyens de traitement de la carte d'identification d'abonné (11) sont configurés pour la mise en œuvre du procédé selon l'une des revendications 1 à 6.

8. Terminal selon la revendication 7, dans lequel les moyens de traitement de données (13) du terminal (10) sont configurés pour envoyer à la carte d'identification d'abonné (11), suite à la relance des moyens de connexion (12), un message d'instructions déclenchant la réinitialisation dudit au moins un fichier d'informations de connexion.

## Patentansprüche

1. Verfahren für den Anschluss eines Endgeräts (10), anhand von Anschlussmitteln (12), an ein besseres Mobilfunknetz (1b), das aus einer Vielzahl von verfügbaren Mobilfunknetzen (1a, 1b, 1c) ausgewählt wird, wobei das Endgerät (10) eine Abonnenten-Identifizierungskarte (11) umfasst, wobei das Verfahren **dadurch gekennzeichnet ist, dass** es bei einem Neustart der Abonnenten-Identifizierungskarte (11) und/oder der Anschlussmittel (12) die folgenden Schritte umfasst:
(a) Zurücksetzen durch Verarbeitungsmittel der Abonnenten-Identifizierungskarte (11) mindestens einer Anschlussinformationsdatei, die in den Datenspeichermitteln der Abonnenten-Identifizierungskarte (11) gespeichert ist;
(b) Urteilsfreies Auswählen des besten Netzes (1b) gemäß einem Kriterium der Anschlussmittel (12) aus der Vielzahl von verfügbaren Mobilfunknetzen (1a, 1b, 1c),
wobei eine ausgewählte leere Liste bevorzugter Netze, PPLMN, in den Datenspeichermitteln der Abonnenten-Identifizierungskarte (11) gespeichert ist.

2. Verfahren nach Anspruch 1, wobei das im Schritt (b) als das Beste ausgewählte Netz das Netz ist, bei dem die durch das Endgerät (10) empfangene Leistung die höchste ist.

3. Verfahren nach einem der Ansprüche 1 und 2, wobei eine Anschlussinformationsdatei eine Lokalisierungsinformationsdatei, LOCI, ist, in der ein letztes Netz (1a), RPLMN, eingetragen ist, an das das Endgerät (10) angeschlossen war, wobei das Zurücksetzen der Datei, LOCI, im Schritt (a) aus dem Löschen der Informationen in Bezug auf das letzte Netz, RPLMN, aus der Datei, LOCI, besteht.

4. Verfahren nach Anspruch 3, wobei eine oder mehrere andere Anschlussinformationsdateien aus einer zweiten Lokalisierungsinformationsdatei, LOCIGPRS, Verschlüsselungsinformationsdateien, Kc und KcGPRS, und Schlüssel-Integritätsinformationsdateien, Keys und KeysPS, ausgewählt werden, wobei der Schritt (a) das Zurücksetzen der anderen Anschlussinformationsdateien bei jedem Neustart der Abonnenten-Identifizierungskarte (11) und/oder von Anschlussmitteln (12) umfasst.

5. Verfahren nach einem der vorstehenden Ansprüche, wobei der Schritt (a) das Zurücksetzen bei jedem Neustart der Abonnenten-Identifizierungskarte (11) und/oder von Anschlussmitteln (12) aller Anschlussinformationsdateien umfasst, die in den Speichermitteln der Abonnenten-Identifizierungskarte (11) gespeichert sind, die Informationen in Bezug auf eine Auswahl eines besseren Netzes (1b) aus einer Vielzahl von Mobiltelefonnetzen (1a, 1b, 1c) enthalten.

6. Verfahren nach einem der vorstehenden Ansprüche, wobei der Schritt (a) das Erzeugen, durch die Datenverarbeitungsmittel der Abonnenten-Identifizierungskarte (11), bei jedem Neustart der Abonnenten-Identifizierungskarte (11), einer für den Neustart kennzeichnenden Nachricht umfasst, wobei das Erzeugen der Nachricht das Zurücksetzen der mindestens einen Anschlussinformationsdatei auslöst.

7. Endgerät (10), Datenverarbeitungsmittel (13), Anschlussmittel (12) an ein Mobiltelefonnetz (1a, 1b, 1c) und eine Abonnenten-Identifizierungskarte (11) umfassend, die Datenverarbeitungsmittel und Datenspeichermittel umfasst, in denen mindestens eine Anschlussinformationsdatei gespeichert ist, **dadurch gekennzeichnet, dass** die Anschlussmittel (12) und die Verarbeitungsmittel der Abonnenten-Identifizierungskarte (11) für das Anwenden des Verfahrens nach einem der Ansprüche 1 bis 6 konfiguriert sind.

8. Endgerät nach Anspruch 7, wobei die Datenverarbeitungsmittel (13) des Endgeräts (10) konfiguriert sind, um nach dem Neustart der Anschlussmittel (12) eine Anweisungsnachricht zur Abonnenten-Identifizierungskarte (11) zu senden, die das Zurücksetzen der mindestens einen Anschlussinformationsdatei auslöst.

## Claims

1. Method for connecting a terminal (10) via connection means (12) to a best mobile telephone network (1b) chosen out of a plurality of available mobile telephone networks (1a, 1b, 1c), the terminal (10) comprising a subscriber identification card (11), the method being **characterised in that** it comprises during a relaunch of the subscriber identification card (11) and/or of the connection means (12) the steps of:
(a) Reinitialisation by processing means of the subscriber identification card (11) of at least one connection information file stored on data-storage means of the subscriber identification card (11);
(b) Selection without bias of the best network (1b) according to a criterion of the connection means (12) out of said plurality of available mobile telephone networks (1a, 1b, 1c),
wherein a list of preferred networks, PPLMNs, chosen empty is stored on the data-storage means of the subscriber identification card (11).

2. Method according to claim 1, wherein the network selected in step (b) as being the best is the network for which the power received by the terminal (10) is the greatest.

3. Method according to one of claims 1 and 2, wherein a connection information file is a location information file, LOCI, in which a last network (1a) to which the terminal (10) was connected, RPLMN, is registered, the reinitialisation of said file, LOCI, in step (a) involving the deletion of the information relative to said last network, RPLMN, from said file, LOCI.

4. Method according to claim 3, wherein one or more other connection information files are chosen out of a second location information file, LOCIGPRS, encryption information files, Kc and KcGPRS, and key-integrity information files, Keys and KeysPS, step (a) comprising the reinitialisation of said other connection information files upon each relaunch of the subscriber identification card (11) and/or of the connection means (12).

5. Method according to one of the previous claims, wherein step (a) comprises the reinitialisation upon each relaunch of the subscriber identification card (11) and/or of the connection means (12) of all the connection information files stored in the data-storage means of the subscriber identification card (11) containing information relative to a choice of a best network (1b) out of a plurality of mobile telephone networks (1a, 1b, 1c).

6. Method according to one of the previous claims, wherein step (a) comprises the generation by data-processing means of the subscriber identification card (11), upon each relaunch of the subscriber identification card (11), of a message characteristic of the relaunch, the generation of said message triggering the reinitialisation of said at least one connection information file.

7. Terminal (10) comprising data-processing means (13), means (12) for connecting to a mobile telephone network (1a, 1b, 1c), and a subscriber identification card (11) comprising data-processing means and data-storage means on which at least one connection information file is stored, **characterised in that** said connection means (12) and said processing means of the subscriber identification card (11) are configured for the implementation of the method according to one of claims 1 to 6.

8. Terminal according to claim 7, wherein the data-processing means (13) of the terminal (10) are configured to send to the subscriber identification card (11), after the relaunch of the connection means (12), an instruction message triggering the reinitialisation of said at least one connection information file.
